(19) **Europäisches Patentamt / European Patent Office / Office européen des brevets**

(11) **EP 1 430 582 B1**

(12) **FASCICULE DE BREVET EUROPEEN**

(45) Date de publication et mention
de la délivrance du brevet:
**08.05.2013 Bulletin 2013/19**

(21) Numéro de dépôt: **02800156.8**

(22) Date de dépôt: **27.09.2002**

(51) Int Cl.:
*H02H 7/06* (2006.01)  *H02J 7/24* (2006.01)

(86) Numéro de dépôt international:
**PCT/FR2002/003303**

(87) Numéro de publication internationale:
**WO 2003/030327 (10.04.2003 Gazette 2003/15)**

(54) **DISPOSITIF DE LIMITATION DE LA TEMPERATURE DE L'ENROULEMENT INDUCTEUR DU ROTOR D'UNE MACHINE ELECTRIQUE TOURNANTE ET DISPOSITIF DE CHARGE D'UNE BATTERIE POURVU D'UN TEL DISPOSITIF DE CONTROLE**

TEMPERATURBEGRENZUNGSVORRICHTUNG EINER FELDWICKLUNG EINES LÄUFERS EINER ROTIERENDEN ELEKTRISCHEN MASCHINE UND BATTERIELADE VORRICHTUNG MIT DIESER VORRICHTUNG

DEVICE FOR LIMITING THE TEMPERATURE OF THE ROTOR FIELD WINDING OF A ROTARY ELECTRIC MACHINE AND A DEVICE FOR CHARGING A BATTERY EQUIPPED WITH ONE SUCH CONTROL DEVICE

(84) Etats contractants désignés:
**AT BE BG CH CY CZ DE DK EE ES FI FR GB GR IE IT LI LU MC NL PT SE SK TR**

(30) Priorité: **28.09.2001 FR 0112537**

(43) Date de publication de la demande:
**23.06.2004 Bulletin 2004/26**

(73) Titulaire: **VALEO EQUIPEMENTS ELECTRIQUES MOTEUR**
**94017 Créteil Cedex (FR)**

(72) Inventeur: **PIERRET, Jean-Marie**
**75012 Paris (FR)**

(74) Mandataire: **Gamonal, Didier**
**Valeo Equipements Electriques Moteur**
**Propriété Industrielle**
**2 Rue André Boulle**
**B.P. 150**
**94017 Créteil Cedex (FR)**

(56) Documents cités:
**US-A- 5 510 687    US-A- 5 708 336**
**US-A- 6 081 103**

Printed by Jouve, 75001 PARIS (FR)

# EP 1 430 582 B1

**Description**

**Domaine de l'invention**

L'invention concerne un dispositif de contrôle de la température de l'enroulement inducteur du rotor d'une machine électrique tournante tel qu'un alternateur, notamment pour véhicule automobile, du type comprenant des moyens indicateur de la température du rotor et des moyens de régulation du courant d'excitation du rotor en fonction de la température indiquée.

L'invention concerne également un dispositif de charge d'une batterie de véhicule automobile, comportant un alternateur.

**Etat de la technique**

Dans les dispositifs de ce type, qui sont connus, pour réduire le courant d'excitation et le débit de l'alternateur en cas de surchauffe, on utilise des limiteurs thermiques internes au régulateur, pour protéger ce dernier. Dans le document US 6 081 103, conforme au préambule de la revendication 1, on fait appel à un capteur de température intégré au régulateur de tension pour réguler le courant d'excitation du rotor. Cette solution fait appel à un organe supplémentaire. En effet, la différence de température entre le rotor et le régulateur peut varier fortement. Une solution plus précise consiste à utiliser des sondes thermiques disposées l'extérieur du régulateur. Mais cette solution nécessite des connexions entre la sonde et le régulateur et est donc moins économique que les limiteurs thermiques internes au régulateur. De plus, il est. difficile de placer ces sondes thermiques sur l'ensemble tournant qu'est le rotor d'un alternateur.

Objet de l'invention

La présente invention a pour but de proposer une solution satisfaisante au problème qui vient d'être énoncé.
Ce but est résolu par la revendication 1
Selon une caractéristique de l'invention, le régulateur comprend des moyens de réduction du courant d'excitation lorsque la valeur de la résistance est égale ou supérieure à une valeur prédéterminée.
Selon une autre caractéristique de l'invention, le dispositif de contrôle de la température comporte un dispositif de mesure du courant d'excitation.
Selon encore une autre caractéristique de l'invention, le système selon l'invention comporte des moyens pour calculer la valeur moyenne du courant d'excitation.
Selon encore une caractéristique de l'invention, le régulateur comporte des moyens de mesure de la valeur de crête négative du courant d'excitation juste après la fermeture du commutateur d'excitation et la valeur de crête positive de ce courant juste avant l'ouverture de ce commutateur et le moyen de calcul est adapté pour calculer la valeur moyenne des valeurs de crêtes négatives et positives.
Selon encore un autre caractéristique de l'invention, la valeur moyenne est établie sur plusieurs périodes du signal d'excitation.
Le dispositif de charge de la batterie, notamment de véhicule automobile est caractérisé en ce qu'il comporte un dispositif de contrôle selon l'invention.

**Brève description des dessins**

L'invention sera mieux comprise, et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :

- La figure 1 illustre l'allure d'un signal de commande d'excitation et du courant d'excitation traversant le bobinage d'excitation du rotor d'un alternateur, pour expliciter le procédé d'établissement de la valeur moyenne du courant d'excitation, conformément à l'invention ;
- La figure 2 montre le schéma d'un circuit régulateur permettant la mesure du courant d'excitation traversant le bobinage d'excitation du rotor d'alternateur, et
- La figure 3 illustre les allures d'un signal de commande de l'excitation, du courant d'excitation, du courant traversant le commutateur de commande de l'excitation ainsi que deux de tensions intervenant dans le circuit de la figure 2.

**Exemples de réalisation de l'invention**

Le système de contrôle selon l'invention sera décrit ci-après dans une application à un alternateur à fort débit qui fait parti d'un dispositif de charge de la batterie par exemple d'un véhicule automobile et est équipé d'un régulateur de la tension de la batterie.

Ainsi qu'on le sait un alternateur polyphasé pour véhicule automobile comporte une poulie destinée à être reliée au moteur à combustion interne du véhicule et solidaire de l'extrémité avant d'un arbre de rotor, un palier avant portant centralement un roulement à billes avant, un palier arrière portant centralement un roulement à billes arrière, un stator comprenant un corps de stator rainuré portant un bobinage de stator, un rotor solidaire de l'arbre de rotor dont les extrémités axiales sont montées dans les roulements à billes respectivement avant et arrière, un dispositif de redressement pour transformer le courant alternatif produit par le bobinage du stator en un courant continu, un porte-balais et un régulateur de tension relié aux balais du porte-balais.

Il est en outre prévu des moyens de refroidissement de l'alternateur.

Dans une forme de réalisation les moyens de refroidissement comportent au moins un ventilateur interne solidaire de l'une des extrémités axiales du rotor. Ce ventilateur engendre une circulation d'air. Pour ce faire le palier adjacent est ajouré.

Le plus souvent deux ventilateurs sont prévus à chaque extrémité axiale du rotor. Les ventilateurs sont implantés en dessous des extrémités du bobinage du stator formant des chignons de part et d'autre du corps du stator. Ce bobinage comporte plusieurs enroulement à savoir au moins un par phase que comporte le stator polyphasé.

En variante les paliers avant et arrière sont conformés pour former une chambre pour la circulation d'un fluide de refroidissement, tel que le fluide de refroidissement du moteur thermique du véhicule.

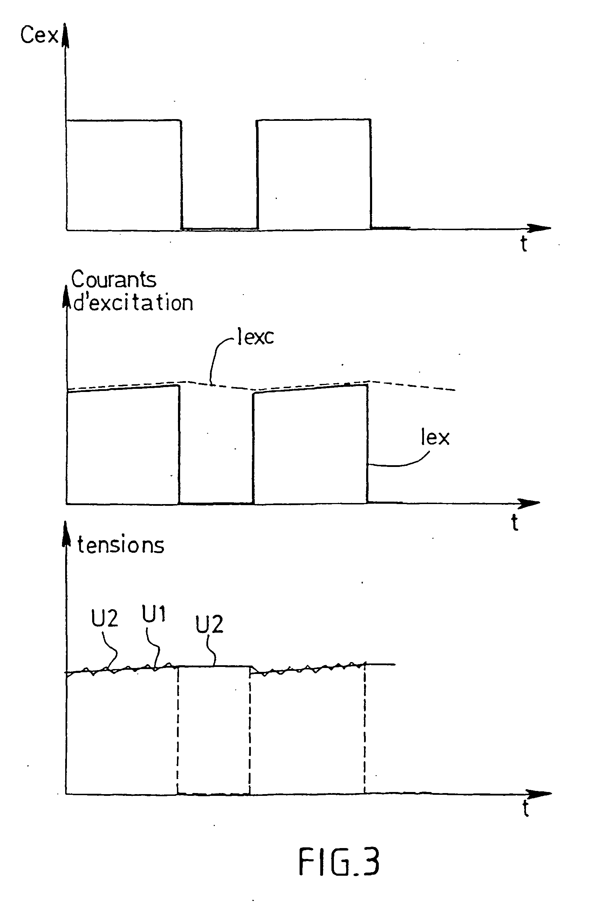

De manière connue, le rotor comporte deux roues polaires entre lesquelles est monté un noyau portant un enroulement inducteur dont les extrémités sont reliées à des bagues collectrices au contact desquels viennent frotter les balais du porte-balais porté par le palier arrière. Pour plus de précisions on se reportera par exemple au document WO01/69762, notamment à la figure 3 ; les roues polaires étant des roues polaires à griffes avec des dents d'orientation axiale imbriquées. Lorsque l'enroulement inducteur du rotor est activé il est ainsi, de manière connue, formée des pôles magnétiques Nord- Sud. Le régulateur permet de limiter la tension à la sortie du dispositif de redressement relié au réseau de bord et à la batterie du véhicule.

Le noyau du rotor peut être indépendant des roues polaires ou être constitué de deux demi noyaux.

Dans une forme de réalisation le palier arrière porte le dispositif de redressement et le régulateur.

En variante comme décrit dans le document WO01/69762 le régulateur et le dispositif de redressement sont montés à l'extérieur de l'alternateur.

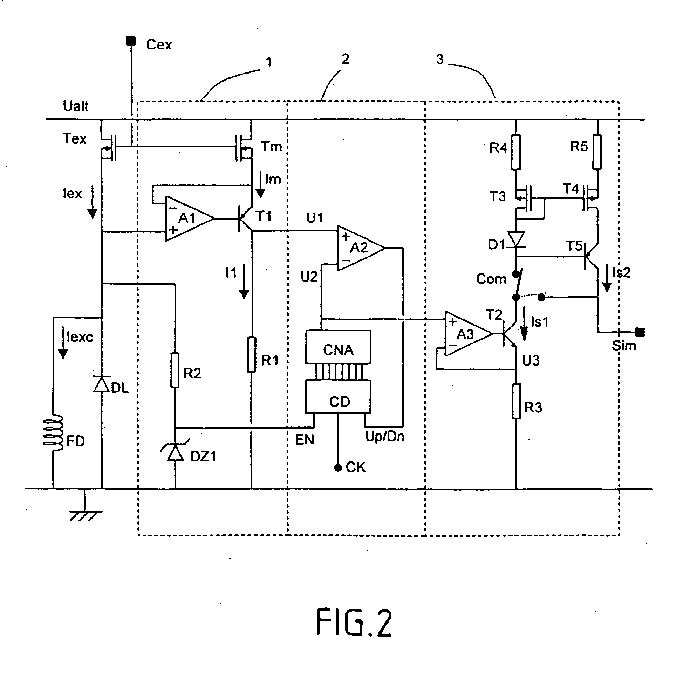

Le circuit d'un tel régulateur est illustré sur la figure 2. Il est nécessaire de protéger l'alternateur et son rotor en particulier pour éviter leur surchauffe.

Le système selon l'invention est basé sur la découverte que la résistance de l'enroulement inducteur, dit aussi bobinage d'excitation ou bobinage rotorique, du rotor peut servir de critère indicateur de la température de l'enroulement inducteur et donc accomplir la fonction d'une sonde thermique, avec l'avantage que cette sonde n'est pas un organe supplémentaire devant être rapporté et placé sur les parties chaudes de l'alternateur tel que le pont redresseur, le stator ou dans le régulateur, comme cela est connu de l'état de la technique.

En effet, l'enroulement inducteur du rotor des alternateurs est réalisé généralement en cuivre dont la résistance varie fortement avec la température, qui pourrait être de l'ordre de 70 % entre les températures de 25°C et 200°C. Quand la valeur de cette résistance devient trop importante, on en déduit que le rotor est trop chaud et qu'il faut réduire le courant d'excitation de l'enroulement inducteur du rotor pour limiter le débit et l'échauffement de l'alternateur et de son rotor spécifiquement.

Pour faciliter la compréhension de l'invention, on décrira tout d'abord le circuit régulateur selon la figure 2 puisque ce circuit permet de mesurer le courant d'excitation s'écoulant à travers l'enroulement d'excitation du rotor et dont la connaissance est nécessaire pour la mise en oeuvre de l'invention.

Le circuit régulateur comprend dans sa partie gauche sur la figure 2, de façon classique en soi, un bobinage FD constituant le bobinage d'excitation ou bobinage rotorique d'un alternateur ou alterno-démarreur de véhicule automobile, un transistor de puissance Tex, de préférence en technologie MOS, connecté en série avec le bobinage FD entre la tension de sortie Ualt de l'alternateur (correspondant à la tension de batterie) et la masse. Une diode de roue libre est montée en antiparallèle avec le bobinage FD.

Le courant qui circule dans le transistor Tex est noté Iex, tandis que le courant qui circule effectivement dans le bobinage FD est noté Iexc. Ces deux courants, sont illustrés respectivement en traits pleins et en traits interrompus sur la figure 3.

De façon également classique, la grille du transistor Tex reçoit un signal de commande d'excitation Cex, constitué d'un signal à modulation de largeur d'impulsion dont l'allure est également illustrée sur la figure 3.

On observe sur la figure 3 que par l'effet de lissage de l'inductance du bobinage FD, le courant Iexc présente une composante alternative très faible. Le courant Iex est quant à lui haché par le transistor Tex, et ce n'est qu'aux instants où Tex est fermé que les courants Iex et Iexc se superposent.

Le dispositif selon l'invention comprend trois parties principales, à savoir un circuit 1 de mesure de courant dans le transistor Tex, un circuit 2 de mémorisation de la valeur mesurée, et un circuit de sortie 3 apte à délivrer des signaux représentatifs du niveau courant d'excitation Iexc.

Le circuit 1 comprend tout d'abord un transistor Tm monté en miroir de courant avec le transistor Tex. Ce transistor TM a son drain reliée au drain de Tex et à la tension Ualt et sa grille reliée à la grille de Tex.

Le transistor Tm est donc capable de recopier en un courant Im, avec un coefficient d'atténuation fixe prédéterminée, le courant Iex circulant entre le drain et la source de Tex. Par exemple, ce coefficient est de 1/1000.

Avantageusement, pour assurer une bonne proportionnalité entre les courants Iex et Im, le transistor Tm est réalisé avec les mêmes cellules de base que le transistor de puissance Tex. Dans l'exemple choisi ici, il suffit d'utiliser pour réaliser Tm un nombre de cellules élémentaires du transistor Tex.

La recopie proportionnelle du courant Tex dans Tm implique que les trois bornes de chaque transistor soient respectivement aux mêmes potentiels. On a vu plus haut que les drains et les grilles des transistors sont reliées ensemble. Pour ce qui concerne les potentiels de sources, on observe sur la figure 2 que les sources sont reliés ensemble par l'intermédiaire des entrées inverseuse et non inverseuse d'un amplificateur opérationnel A1, qui a pour propriété inhérente de maintenir ses deux entrées au même potentiel. La condition de recopie proportionnelle est donc remplie.

La source Tm est en outre relié à l'émetteur d'un transistor bipolaire PNP T1, dont la base est attaquée par la sortie de AI. Le circuit de mesure 1 comprend en outre une résistance R1 reliée entre le collecteur de T1 et la masse, et une résistance R2 et une diode Zéner écrêteuse DZ1 montées toutes les deux en série entre la source de Tex et la masse. Le collecteur de T1 est également relié à l'entrée non-inverseuse d'un amplificateur opérationnel A2, qui par définition ne tire aucun courant.

Le courant I1 sur le collecteur de T1 est donc égal au courant Im, au courant de base de T1 près que l'on négligera ici.

Ce courant produit aux bornes de R1 une tension U1 égale à R1xI1, et l'on comprend que cette tension U1 se présente sous la forme d'un signal de même forme d'onde et de niveau proportionnel au courant Iex dans Tex.

La résistance R2 et la diode écrêteuse DZ1 (dont la tension en inverse est choisie de préférence égale à 5 volts) engendrent sur leur borne commune un signal logique EN représentatif de l'état ouvert ou fermé du transistor Tex. Ainsi, si Tex est fermé, un courant circule dans R2 et DZ1 et le signal EN est au niveau logique "1" ; si au contraire Tex est ouvert, un courant inverse circule dans DZ1 et R2 et le signal logique EN se situe à un faible niveau au-dessous du zéro volt de la masse, niveau correspondant à la tension de jonction de DZ1 soit typiquement -0,8 volt, qui constitue un niveau logique "0".

Le circuit de mémorisation 2 comprend en premier lieu un circuit compteur/décompteur CD dont les sorties parallèles (par exemple sur huit bits) sont reliées aux entrées parallèles d'un convertisseur numérique/analogique CNA. Le circuit 2 comprend également une entrée pour signal d'horloge CK (ou en variante une horloge interne) qui cadence le comptage et le décomptage réalisés par le circuit DC. L'amplificateur opérationnel A2, monté en comparateur, reçoit sur son entrée non-inverseuse comme on l'a dit la tension U1, et sur son entrée inverseuse la tension U2 de sortie du convertisseur CNA. Le comparateur A2 a pour objet d'engendrer un signal logique Up/Dn de sens de comptage/décomptage appliqué à l'entrée correspondante du compteur/décompteur CD.

Le fonctionnement de ce circuit de mémorisation 2 est le suivant :

- si Tex est ouvert, le signal EN est au niveau logique "0" si bien que le compteur/décompteur CD est gelé ; la tension U2 reste donc à une valeur constante ;
- si maintenant Tex est fermé, le signal EN est au niveau logique "1" pour activer le comptage/décomptage dans CD ; il existe alors deux possibilités :

  * si U2 < U1, la sortie de A2 est au niveau logique "1", ce qui correspond à un comptage dans le circuit CD ; la valeur de U2 augmente donc pour se rapprocher de U1 ;
  * si au contraire U2 > U1, la sortie de A2 est au niveau logique "0", ce qui cause un décomptage dans le circuit CD : la valeur de U2 diminue donc pour se rapprocher de U1.

Ainsi l'on comprend que, dès que Tex est fermé, le circuit CNA délivre une tension U2 qui par rétroaction est maintenue sur une valeur qui est la plus proche de U1. Mais dès que Tex devient ouvert, le compteur/décompteur CD est arrêté, si bien que U2 conserve aussi longtemps que Tex est ouvert la dernière valeur acquise avant l'ouverture de Tex.

L'allure de l'évolution de la tension U2 (en traits pleins) est illustrée sur la figure 2. On observe donc qu'en se calant sur la valeur de crête de U1 (illustrée en traits interrompus), la tension U2 est sensiblement proportionnelle au courant Iexc circulant effectivement dans le bobinage FD.

On observera ici que la tension U2 peut être directement utilisée comme sortie du circuit de l'invention. Toutefois, dans le cas d'un environnement exposé à des perturbation électromagnétiques, un tel signal peut être faussé par de telles perturbations, ou encore par décalage inopiné du potentiel de masse, qui peut se produire dans les véhicules.

En outre, la valeur ohmique de la résistance R1 peut varier assez fortement, en particulier si elle est réalisée en technologie monolithique.

Le dispositif de l'invention comprend donc avantageusement un circuit de sortie 3. Ce circuit comprend un générateur de courant construit autour d'un amplificateur opérationnel A3, d'un transistor bipolaire NPN T2 et d'une résistance R3. L'amplificateur A3 reçoit sur son entrée non-inverseuse la tension U2 produite par le circuit de mémorisation 2, et son entrée inverseuse est reliée à l'émetteur de T2. La sortie de A3 est quant à elle reliée à la base de T2. La résistance R3 est montée entre l'émetteur de T2 et la masse.

Le circuit 3 comprend également un sélecteur Com et un circuit à miroir de courant construit autour de transistors MOS T3 et T4, d'un transistor bipolaire PNP T5, de résistances R4 et R5 et d'une diode bipolaire D1. Plus précisément, le contact mobile du sélecteur Com est relié au collecteur de T2, tandis que l'un de ses contacts fixes est relié à la cathode de D1 ainsi qu'à la base de T5. L'anode de D1 est reliée à la grille et au drain de T3, dont la source est reliée à la tension Ualt via la résistance R4. De l'autre côté du miroir de courant, le transistor T5 a sa source reliée à la tension Ualt via la résistance R5, sa grille reliée à la grille de T4 et son drain relié à l'émetteur de T5. L'autre contact fixe du sélecteur Com est relié au collecteur de T5 ainsi qu'à une borne de sortie Sim du dispositif.

Le fonctionnement du circuit de sortie 3 est le suivant. En premier lieu, le circuit générateur de courant A3, T2, R3 engendre au niveau du collecteur de T2 un courant Is1 qui est proportionnel à la tension U2. En outre, si l'on choisit pour R3 une valeur ohmique égale à celle de R1, alors le courant Is1 est sensiblement égal au courant Im pendant les phases où Tex est fermé.

Lorsque le circuit Com a son contact mobile dans la position illustrée en traits pleins, le miroir de courant T3, T4, T5, D1, R4, R5 est actif pour produire au niveau du collecteur de T5, et donc sur la borne de sortie Sim, un courant sortant Is2 qui est proportionnel à Is1 ou égal à celui-ci.

On notera ici que la tension de jonction de la diode D1 située du côté de T3 permet d'assurer une polarisation identique au niveau de T3 et de T4, étant donné que T4 a de son côté à subir la tension de jonction émetteur/base de T5.

On notera également que les résistances R4 et R5 sont des résistances d'équilibrage permettant de conserver une bonne proportionnalité ou égalité entre les courants Is1 et Is2.

A l'inverse, dans le cas où le sélecteur Com occupe la position indiquée en pointillés, c'est le courant Is2 qui est appliqué directement comme courant entrant sur la borne sortie Sim.

Ainsi le sélecteur Com permet, en offrant un mode de sortie "courant sortant" et un mode de sortie "courant entrant", une plus grande souplesse d'interfaçage du dispositif de l'invention avec un dispositif de contrôle moteur existant.

Le dispositif ci-dessus présente comme on va le voir de bonnes propriétés en matière de compensation thermique. En particulier, le courant Is1 ou Is2 engendré en sortie présente une excellente proportionnalité (ou égalité) avec le courant I1 lui-même proportionnel au courant dans le transistor Tex.

Plus précisément, on comprend que pendant les phases où Tex est passant, on a par construction :

$$U1 = U2 = U3$$

On a également :

$$U1 = R1.I1$$

et

$$U3 = R3.Is1$$

Si le rapport R1/R3 est constant, alors la proportionnalité entre I1 et Is1 est garantie.

En outre, si l'on choisit R1 = R3, alors on a :

$$Is1 = I1$$

Pour ce qui concerne maintenant la proportionnalité entre Im (sensiblement égal à I1) et Iex, elle est garantie lorsque les transistors Tex et Tm sont polarisés de la même façon et réalisés avec les mêmes cellules élémentaires sur un substrat semi-conducteur commun.

Enfin la proportionnalité ou l'égalité entre les valeurs de Is1 et Is2 est garantie par le recours à des transistors T3 et T4 polarisés identiquement et à des résistances proportionnelles ou identiques, respectivement.

Comme on l'a indiqué, le dispositif décrit ci-dessus est avantageusement réalisé sous forme d'un circuit monolithique, et de préférence sur la même puce de semi-conducteur que le circuit régulateur d'excitation (comportant en particulier le transistor Tex et la diode DL) de l'alternateur ou alterno-démarreur. Dans ce cas, on réalise avantageusement les transistors jouant le rôle de miroirs de courant (à savoir Tex et Tm d'une part, et T3 et T4 d'autre part) à partir des mêmes cellules élémentaires. En outre, on réalise avantageusement les résistances R1 et R3 d'une part, et R4 et R5 d'autre part, pour qu'elles soient exposées aux mêmes conditions thermiques.

Comme on l'a décrit, le circuit de la figure 2 est apte à transmettre un signal représentatif du courant d'excitation au dispositif de contrôle moteur sous forme d'un courant. Dans ce cas, le dispositif de contrôle moteur possède un dispositif de conversion analogique/numérique capable de dériver de ce courant une valeur numérique utilisable dans les traitements qu'il effectue.

En variante, le circuit de la figure 2 peut incorporer, en aval de la borne Sim, un tel circuit de conversion analogique/numérique, l'information étant dans ce cas transmise au dispositif de contrôle moteur sous forme numérique, par exemple selon des formats ou protocoles numériques standard tels que le "bit synchrone" ou le "LIN".

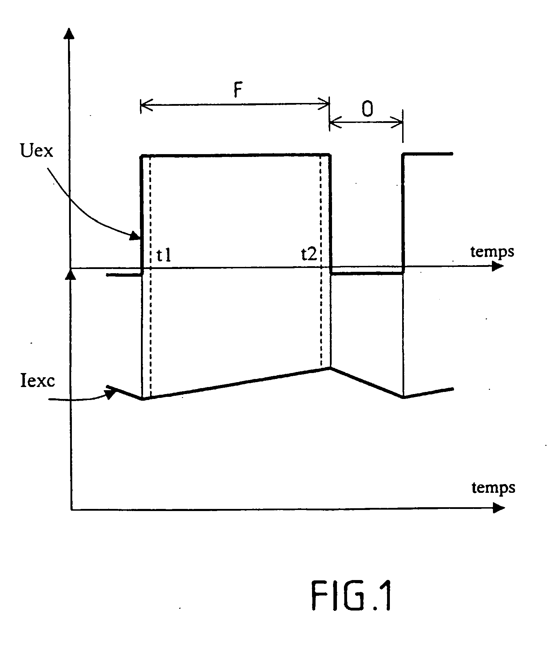

En se reportant à la figure 1 on décrira maintenant le système permettant d'éviter la surchauffe de l'alternateur. Cette figure montre en haut le signal d'excitation Uex qui est délivré par le transistor d'excitation Tex et caractérisé par son rapport cyclique $\tau$. Le régulateur, de façon connue en soi, mesure et régule la tension du réseau de bord Vreg. Comme il a été décrit ci-avant, le régulateur est également apte à mesurer le courant d'excitation Iexc qui s'écoule à travers l'enroulement inducteur FD du rotor de l'alternateur et dont le tracé typique est donné sur la figure 3. Ce courant d'excitation Iexc est représenté sur la figure 1 en-dessous de la tension d'excitation Uex.

La résistance de l'enroulement inducteur du rotor s'obtient par mise en relation des valeurs de la tension du réseau de bord Vreg, du rapport cyclique d'excitation $\tau$ et du courant d'excitation Iexc.

En effet, si on néglige la chute de tension dans le transistor d'excitation Tex, dans les balais et dans la diode de roue libre, la tension moyenne Urot appliquée au rotor est pratiquement égale à :

$$\text{Urot} = \text{Vreg} \times \tau$$

Cette relation s'avère bien juste pour les cas de surchauffe lorsque les rapports cycliques d'excitation sont importants et l'effet de la diode de roue libre est faible. La valeur de la résistance du rotor Rrot s'obtient alors par l'équation suivante :

$$\text{Rrot} = \text{Urot} / \text{Iexc} = (\text{Vreg} \times \tau) / \text{Iexc}$$

Le régulateur notamment lorsqu'il comporte une architecture numérique avec micro-processeur peut réaliser ce calcul. On peut considérer que la tension du réseau de bord Vreg varie peu car cette valeur ne dépend que de la compensation thermique acceptable pour la charge de la batterie. Dans ces conditions, la tension du réseau de bord peut être assimilée à une constante K, et la valeur de la résistance du rotor peut être calculée en appliquant l'équation suivante :

$$\text{Rrot} = \text{K} \times \tau / \text{Iexc}$$

Or, comme le montre la figure 1, le courant d'excitation Iexc n'est pas rigoureusement constant et varie en fonction des alternances du signal d'excitation Uex, ce qui peut perturber le calcul de la résistance du rotor Rrot. En effet, ce courant augmente lorsque le transistor d'excitation Tex est fermé pendant la période de fermeture F et diminue quand le transistor est ouvert pendant la période O. Pour éviter le problème occasionné par la variation du courant d'excitation, on amène conformément à l'invention le régulateur à mesurer la valeur de crête négative du courant d'excitation Iexc juste après la fermeture du transistor d'excitation Tex, c'est-à-dire la valeur mesurée à l'instant t1, et la valeur de crête positive de ce courant, mesurée juste avant l'ouverture du transistor Tex, c'est-à-dire à l'instant t2, comme le montre la figure 1. La valeur moyenne du courant d'excitation est la moyenne des valeurs de crête négative et positive.

Or, pour assurer un bon niveau de régulation, le rapport cyclique d'excitation peut varier fortement d'une période à l'autre. Pour prendre en compte cette variation, il est proposé de faire aussi la moyenne du rapport cyclique sur plusieurs périodes. Cette moyenne est facilement réalisable avec un régulateur numérique. Dans certains dispositifs elle est obtenue automatiquement. Par exemple si l'on utilise les solutions décrites dans le brevet français 2 747 860 de la demanderesse, la valeur du rapport cyclique utilisée pour la boucle fermée peut être considérée comme une valeur moyenne du rapport cyclique d'excitation permettant le calcul de la résistance du rotor Rrot.

Le système de contrôle qui vient d'être décrit comme étant particulièrement applicable à des alternateurs ou alterno-démarreur à fort débit pour véhicule automobile est utilisable dans tous les cas où un problème de surchauffe identique ou similaire au problème qui a été décrit se pose. La méthode de contrôle de la température de l'enroulement par établissement de la résistance de cette enroulement est bien entendu utilisable dans des dispositifs de charge de la batterie pour véhicule automobile.

Pour mémoire on rappellera qu'un alterno-démarreur est une machine réversible apte à fonctionner en générateur de courant ou en moteur électrique pour notamment démarrer le véhicule.

Pour plus de précisions on se reportera au document WO-A-01/69762 précité.

## Revendications

1. Dispositif de contrôle de la température de l'enroulement inducteur du rotor d'une machine électrique tournante tel qu'un alternateur, notamment pour véhicule automobile, du type comprenant des moyens indicateur de la température du rotor et des moyens de régulation du courant d'excitation du rotor en fonction de la température indiquée, **caractérisé en ce que** les moyens indicateur de la température du rotor sont formés par la résistance de l'enroulement inducteur (FD) du rotor, **en ce qu'**il comporte des moyens d'établissement de la valeur de la résistance de l'enroulement inducteur à partir d'au moins trois paramètres, à savoir le rapport cyclique du signal d'excitation, la valeur du courant d'excitation et la valeur de la tension régulée de la source d'alimentation en énergie électrique, **en ce qu'**il comporte des moyens pour calculer la valeur moyenne du courant d'excitation et ce que la valeur moyenne du courant d'excitation est établie à partir des valeurs de crêtes positive et négative du courant d'excitation, mesurées juste après la fermeture du commutateur d'excitation de passage du courant d'excitation et juste avant l'ouverture du commutateur.

2. Dispositif selon la revendication 1, **caractérisé en ce qu'**il comprend des moyens de réduction du courant d'excitation (Iexc) lorsque la valeur de la résistance est égale ou supérieure à une valeur prédéterminée.

3. Dispositif selon la revendication 1 ou 2, **caractérisé en ce qu'**il comporte un dispositif de mesure du courant d'excitation.

4. Dispositif selon l'une quelconque des revendications précédentes, **caractérisé en ce que** la valeur moyenne du courant d'excitation est établie sur plusieurs périodes du signal d'excitation.

5. Dispositif selon l'une quelconque des revendications précédentes, **caractérisé en ce qu'**il comporte un dispositif de mesure du courant d'excitation (1), un circuit de mémorisation de la valeur mesurée (2) et un circuit de sortie (3) apte à délivrer des signaux représentatifs du niveau du courant d'excitation (Iexc).

6. Dispositif selon la revendication 5, **caractérisé en ce que** le circuit de mesure du courant d'excitation comporte un transistor (Tm) monté en miroir de courant avec un transistor de puissance (Tex) connecté en série avec l'enroulement inducteur (FD) et **en ce que** le transistor de puissance (Tex) reçoit un signal de commande d'excitation constitué d'un signal à modulation de largeur d'amplitude.

7. Dispositif selon la revendication 5 ou 6, **caractérisé en ce que** le circuit de mémorisation (2) comprend un circuit compteur/décompteur (CD).

8. Dispositif selon l'une quelconque des revendications 5 à 7, caractérisé en ce le circuit de sortie (3) comporte un générateur de courant, un sélecteur (Com) et un circuit à miroir de courant.

9. Dispositif de charge de la batterie pour véhicule automobile comportant un alternateur, **caractérisé en ce qu'**il comporte un dispositif de contrôle selon l'une quelconque des revendications précédentes.

## Patentansprüche

1. Vorrichtung zur Kontrolle der Temperatur der Feldwicklung des Rotors einer drehenden elektrischen Maschine, wie eines Drehstromgenerators, insbesondere für ein Kraftfahrzeug, von der Art, die Anzeigeeinrichtungen der Temperatur des Rotors und Regeleinrichtungen des Erregerstroms des Rotors abhängig von der angezeigten Temperatur enthält, **dadurch gekennzeichnet, dass** die Anzeigeeinrichtungen der Temperatur des Rotors vom Widerstand der Feldwicklung (FD) des Rotors geformt werden, dass sie Einrichtungen zur Erstellung des Werts des Widerstands der Feldwicklung ausgehend von mindestens drei Parametern aufweist, nämlich dem Taktverhältnis des Erregersignals, dem Wert des Erregerstroms und dem Wert der geregelten Spannung der Versorgungsquelle mit elektrischer Energie, und dass sie Einrichtungen zur Berechnung des Mittelwerts des Erregerstroms aufweist, und dass der Mittelwert des Erregerstroms ausgehend von den Werten von positiven und negativen Spitzen des Erregerstroms erstellt wird, die kurz nach dem Schließen des Erregerschalters des Durchflusses des Erregerstroms und kurz vor dem Öffnen des Schalters gemessen werden.

2. Vorrichtung nach Anspruch 1, **dadurch gekennzeichnet, dass** sie Einrichtungen zur Reduzierung des Erregerstroms (Iexc) aufweist, wenn der Wert des Widerstands gleich einem oder höher als ein vorbestimmter Wert ist.

3. Vorrichtung nach Anspruch 1 oder 2, **dadurch gekennzeichnet, dass** sie eine Vorrichtung zum Messen des Erregerstroms aufweist.

4. Vorrichtung nach einem der vorhergehenden Ansprüche, **dadurch gekennzeichnet, dass** der Mittelwert des Erregerstroms über mehrere Perioden des Erregersignals erstellt wird.

5. Vorrichtung nach einem der vorhergehenden Ansprüche, **dadurch gekennzeichnet, dass** sie eine Messvorrichtung des Erregerstroms (1), einen Speicherschaltkreis des gemessenen Werts (2) und einen Ausgangsschaltkreis (3) aufweist, der für den Pegel des Erregerstroms (Iexc) repräsentative Signale liefern kann.

6. Vorrichtung nach Anspruch 5, **dadurch gekennzeichnet, dass** der Messschaltkreis des Erregerstroms einen Transistor (Tm) aufweist, der als Stromspiegel mit einem Leistungstransistor (Tex) montiert ist, der in Reihe mit der Feldwicklung (FD) geschaltet ist, und dass der Leistungstransistor (Tex) ein Erregungssteuersignal empfängt, das aus einem Signal mit Amplitudenbreitenmodulation besteht.

7. Vorrichtung nach Anspruch 5 oder 6, **dadurch gekennzeichnet, dass** der Speicherschaltkreis (2) einen Vorwärts/Rückwärtszähler-Schaltkreis (CD) aufweist.

8. Vorrichtung nach einem der Ansprüche 5 bis 7, **dadurch gekennzeichnet, dass** der Ausgangsschaltkreis (3) einen Stromgenerator, einen Wahlschalter (Com) und einen Stromspiegelschaltkreis aufweist.

9. Ladevorrichtung der Batterie für ein Kraftfahrzeug, die einen Drehstromgenerator aufweist, **dadurch gekennzeichnet, dass** sie eine Kontrollvorrichtung nach einem der vorhergehenden Ansprüche, aufweist.

## Claims

1. Device for controlling the temperature of the induction coil of the rotor of an electrical rotating machine such as an alternator, notably for a motor vehicle, of the type comprising means for indicating the temperature of the rotor and means for regulating the excitation current of the rotor as a function of the indicated temperature, **characterized in that** the means for indicating the temperature of the rotor are formed by the resistance of the induction coil (FD) of the rotor, **in that** it comprises means for establishing the value of the resistance of the induction coil based on at least three parameters, namely the duty cycle of the excitation signal, the value of the excitation current and the value of the regulated voltage of the electrical energy supply source, **in that** it comprises means for computing the mean value of the excitation current and **in that** the mean value of the excitation current is established on the basis of the positive and negative peak values of the excitation current, measured just after the closure of the excitation commutator for the passage of the excitation current and just before the opening of the commutator.

2. Device according to Claim 1, **characterized in that** it comprises means for reducing the excitation current (Iexc) when the value of the resistance is equal to or greater than a predetermined value.

3. Device according to Claim 1 or 2, **characterized in that** it comprises a device for measuring the excitation current.

4. Device according to any one of the preceding claims, **characterized in that** the mean value of the excitation current is established over several periods of the excitation signal.

5. Device according to any one of the preceding claims, **characterized in that** it comprises a device for measuring the excitation current (1), a circuit for storing the measured value (2) and an output circuit (3) capable of delivering signals representative of the level of the excitation current (Iexc).

6. Device according to Claim 5, **characterized in that** the circuit for measuring the excitation current comprises a transistor (Tm) mounted as a current mirror with a power transistor (Tex) connected in series with the induction coil (FD) and **in that** the power transistor (Tex) receives an excitation control signal consisting of an amplitude-width modulation signal.

7. Device according to Claim 5 or 6, **characterized in that** the storage circuit (2) comprises an up-down counter circuit (CD).

8. Device according to any one of Claims 5 to 7, **characterized in that** the output circuit (3) comprises a current generator, a selector (Com) and a current mirror circuit.

9. Battery charging device for a motor vehicle comprising an alternator, **characterized in that** it comprises a controlling device according to any one of the preceding claims.

FIG.1

FIG.2

FIG.3

**EP 1 430 582 B1**

## RÉFÉRENCES CITÉES DANS LA DESCRIPTION

**Documents brevets cités dans la description**

- US 6081103 A
- WO 0169762 A
- FR 2747860